# EUROPEAN PATENT APPLICATION

(11) **EP 1 806 825 A2**
(43) Date of publication of application: **11.07.2007**
(21) Application number: 07000115.1
(22) Date of filing: 04.01.2007
(51) Int. Cl.: H02K 7/116, H02K 1/14

(54) **A rotating electrical machine with a transmission and a driving apparatus using the same**

(30) Priority: 05.01.2006 JP 2006000589
(71) Applicant: Hitachi Industrial Equipment Systems Co. Ltd., Chiyoda-ku Tokyo (JP); JAPAN SERVO CO. LTD., Chiyoda-ku Tokyo (JP); Hitachi Powdered Metals Co., Ltd., Matsudo-shi Chiba-ken (JP)
(72) Inventor: Enomoto, Yuji c/o Hitachi Ltd. Intel. Property Gr., Chiyoda-ku Tokyo 100-8220 (JP); Ito, Motoya c/o Hitachi Ltd. Intel. Property Gr., Chiyoda-ku Tokyo 100-8220 (JP); Masaki, Ryoso Hitachi Ind. Equipment Syst. Co. Ltd, Narashino-shi Chiba (JP); Ohiwa, Shoji c/o Japan Servo Co Ltd, Chiyoda-ku Tokyo (JP); Ishihara, Chio c/o Hitachi Powdered Metals Co Ltd, Matsudo-shi Chiba (JP)
(74) Representative: Beetz & Partner

(57) **Abstract**

A rotating electrical machine with a transmission, comprises a stator including a field coil arranged annularly, a cylindrical-shaped rotor, which rotates within the stator, transmissions provided within the cylindrical-shaped rotor, and housings to contain at least the rotor, the transmissions, and lubricating oil, and wherein the stator comprises the annular field coil and an annular core, in which the annular field coil and an organic material are contained and on an inner peripheral surface of which are provided a plurality of projecting claws.

## Description

### Background Of The Invention

The present invention relates to a rotating electrical machine with a transmission, which comprises a core provided with a plurality of teeth, and a driving apparatus using the same.

Motors are used as drive equipment to convert an electric energy into a mechanical output in industrial field, household electrical field, automotive field and the like. Motors as power equipment in these fields are generally demanded to be small in size and to be high in torque.

As a way to increase an output torque, it is conceivable to amplify torque with a reduction mechanism (transmission). According to this, output can be increased by increasing the rotating speed of a motor while the motor remains same in gap magnetic flux density and opposed area. Generally, in uses with a large torque, such way finds an example used in a method of arranging a reduction mechanism (transmission) on an output shaft of a motor such as gear motors, etc. However, this construction does not contribute to miniaturization of a whole system even when a motor itself is made small in size, because a mechanical torque converter becomes large.

Hereupon, a technique, in which a planetary roller mechanism is received in a rotor of a motor to reduce speed to produce a large torque, is disclosed as a construction, in which a motor design made small in size is made the most of, as it is, to obtain a large torque (see Japanese Patent No. 2607889). Also, since the technique in Japanese Patent No. 2607889 involves a problem in heat generation from a transmission and seizure, there is proposed a motor constructed such that a planetary gear mechanism is received in an inner portion of a motor having a hollow shaft structure and oil for lubrication is filled (JP-A-2003-143805). This example illustrates a construction of a rotating electrical machine including a rotor, a stator, and a casing, the rotating electrical machine having a feature in that a planetary roller mechanism is provided inside the rotor to transmit a drive force of the rotor to an outside, and oil is filled inside the rotor or in the casing. Also, there is disclosed a method of providing a gear mechanism in a stator core of an outer rotor type motor and arranging a planetary gear between the gear mechanism and a gear provided on a rotor shaft to reduce the motor in speed to produce a large torque (see JP-A-9-47003).

When a transmission is to be arranged on a rotor of or in a stator of such motor, however, a predetermined space is generally needed since there is a need for a gear, of which teeth number corresponds to a gear ratio for reduction in speed. Therefore, there is caused a problem that an outside diameter of a motor becomes larger than a minimum outside diameter of a motor, which outputs a necessary torque, and so even when a large torque can be materialized by gear reduction, a whole system cannot be increased in effect of miniaturization as compared with the case where a motor of low speed and large torque is directly adopted.

Also, a technique disclosed in JP-A-2003-143805 adopts a construction, in which coils are wound round teeth of a slot structure, and so oil for gear lubrication is filled in a casing of a motor whereby a field coil of the motor is also exposed to the oil. This needs selection of a material of good oil resistance for an insulation material of a field coil and measures of providing a filter in an oil flow passage since insulation of the field coil is damaged by abrasion powder generated in a gear mechanism and a roller mechanism, or the like. In this case, a motor design cannot but have some margin to provide a space for a filter.

In addition, it is conceivable to provide a protective cover on a field coil portion and to use a resin material to seal a field coil to protect the same from an oil (lubricating oil). In case of providing a protective cover, however, a motor is increased in external shape due to the provision of the protective cover, and in case of using a resin material to provide for sealing, sealing with the resin material is difficult since a field coil is large in surface area.

Hereupon, it is an object of the invention to provide a rotating electrical machine with a transmission, which is small in outside diameter, and a driving apparatus using the same.

### Brief Summary Of The Invention

In order to solve the problem, the invention provides a rotating electrical machine with a transmission, comprising a stator including a field coil arranged annularly, a cylindrical-shaped rotor that rotates inside the stator, a transmission provided in the cylindrical-shaped rotor, and a housing containing at least the rotor, the transmission and lubricating oil, wherein the stator comprises the annular field coil and an annular core containing the annular field coil and an organic material and provided on an inner peripheral surface thereof with a plurality of projecting claws.

Since the annular core containing the annular field coil and the organic material is used, lubricating oil for lubrication of the transmission does not come into contact with the field coil. Also, since the field coil can be mounted inside the core, containment with the organic material is easy.

According to the invention, it is possible to provide a rotating electrical machine with a transmission, which is small in outside diameter, and a driving apparatus using the same.

Other objects, features and advantages of the invention will become apparent from the following description of the embodiments of the invention taken in conjunction with the accompanying drawings.

### Brief Description Of The Several Views Of The Drawings

Fig. 1 is a longitudinal sectional view showing a construction of a rotating electrical machine with a transmission according to a first embodiment of the invention.
Fig. 2A is an exploded perspective view showing a structure of a stator.
Fig. 2B is an enlarged perspective view of the stator.
Fig. 3A is a view showing a principle of a claw teeth motor.
Fig. 3B is a view showing a sinusoidal waveform of an alternating current flowing through a field coil.
Fig. 3C is a view showing a manner of magnetization when an electric current flows counterclockwise through the field coil.
Fig. 3D is a view showing a manner of poles when an electric current flows clockwise through the field coil.
Fig. 4 is a cross sectional view showing a construction of a slot type motor.
Fig. 5A is a view showing a principle of a slot type motor, in which a plurality of T-shaped teeth 15c are provided equiangularly inside a stator outer periphery and slots are formed between the teeth.
Fig. 5B is a view showing a principle of a claw teeth motor, and a comparison is made between the case where four teeth depicted in an upper half of the drawing is provided, and the case where one tooth depicted in a lower half of the drawing is provided.
Fig. 6 is a view showing frequency characteristics of core losses of a powder core and flat rolled magnetic steel sheets and strip.
Fig. 7 is a view showing a construction of a moving robot provided with a swing arm.
Fig. 8 is a longitudinal sectional view showing a motor provided with a direct operated mechanism, which has a feed screw.

### Detailed Description Of The Invention

A claw teeth motor comprising a stator receiving a field coil inside an annular core and a cylindrical-shaped rotor provided on an inner periphery of the stator is used, and a transmission comprising a gear or the like is arranged inside the rotor. With a stator core of the claw teeth motor, the annular field coil and the annular stator core are sealed by an organic material such as resin, etc. Thereby, the field coil does not come into contact with air. With the construction, since it suffices that the stator core be formed to have a recess or a hollow in cross section and the field coil be arranged in the recess or the hollow and a major part of a surface area of the field coil is surrounded by the stator core, sealing with the organic material is made easy. Also, the construction is made such that a hollow structured rotor is arranged on an inner periphery of the stator core, a transmission comprising a planetary gear or the like is arranged in the hollow portion, and mechanical portions thereof is filled with lubricating oil (lubricant) or the like. In addition, the stator core is preferably formed from a powder core for the purpose of reducing an eddy current loss.

### (First embodiment)

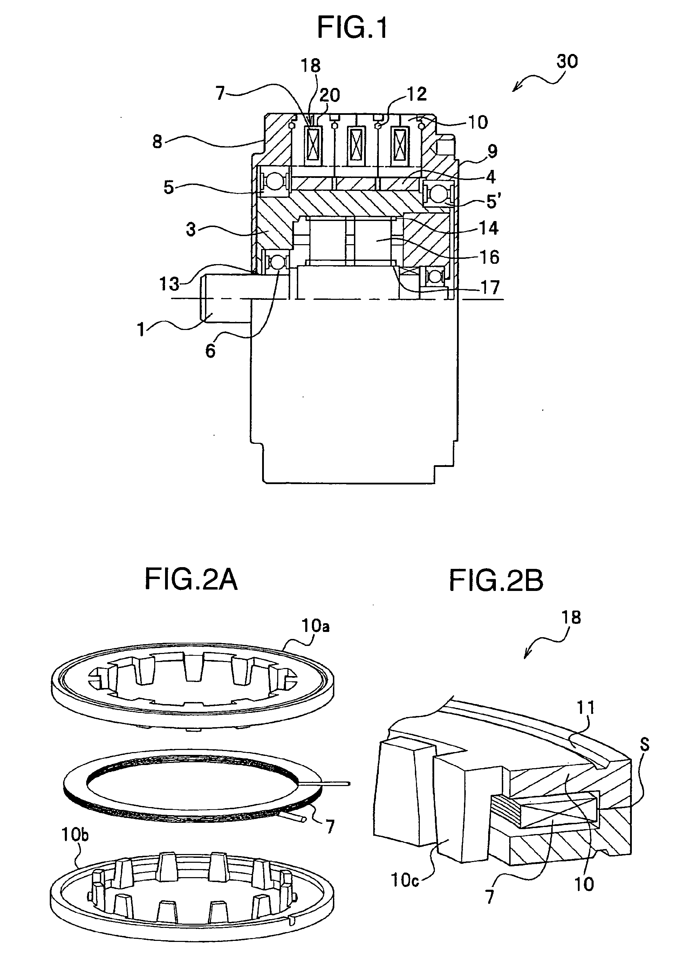

A rotating electrical machine with a transmission, according to an embodiment of the invention, will be described with reference to Figs. 1 and 2. Fig. 1 is a longitudinal sectional view showing a reduction motor 30 comprising a rotating electrical machine with a transmission and Figs. 2A and 2B are perspective views showing a claw teeth core 10 used for a stator of the reduction motor 30.

In Fig. 1, the reduction motor 30 according to the embodiment mainly comprises three stators composed of field coils 7 provided inside the annular-shaped claw teeth core 10, a rotating shaft 3 provided on a surface thereof with a cylindrical-shaped rotor 4, which is magnetized in multi-poles, and a transmission (described later) provided inside the rotating shaft 3 to reduce the rotating speed of an output shaft 1.

In Figs. 2A and 2B, a stator 18 comprises two annular-shaped claw teeth cores 10a, 10b made of a soft magnetic material such as powder core, etc. and the field coils 7, round which a covered conductor is wound annularly, and two claw teeth cores 10a, 10b are structured so that the field coils 7 can be mounted therein and sealed by an organic material such as resin, etc. (see Fig. 2A). The claw teeth cores 10a, 10b are formed to be L-shaped in cross section, and formed to be U-shaped by overlapping short sides S of the L-shapes on each other, and the field coils 7 are mounted in recesses of the U-shapes. Thereby, the stator 18 is formed to be substantially rectangular in cross section. Also, the claw teeth cores 10a, 10b are formed on inner peripheral surfaces thereof with a plurality of trapezoidal-shaped claws (claw teeth) 10c at intervals and on sides thereof with circular-shaped 0-ring fixation grooves 11 (see Fig. 2B). In addition, a length of the claws 10c is substantially equal to a thickness of the stator 18 and a ratio of outside and inside diameters of the stator 18 is such that the inside diameter is larger than that with the ratio being 5:3.

Again, referring to Fig. 1, three stators 18 are provided side by side in an axial direction, terminals of the respective field coils 7 are take out from the outer peripheral surfaces of the stators 18, and the terminals are connected in Y, or in Δ whereby a three-phase alternating current is applied to the field coils 7. The stators 18 are sealed by a resin 20 and 0-rings 12 provide for sealing between end brackets 8, 9, which axially interpose the stators 18, and the stators 18. Also, the 0-rings 12 provide for sealing between the respective stators 18. Further, the rotating shaft 3 is provided to comprise, on a surface thereof, the cylindrical-shaped rotor 4 opposed to the plurality of claws provided on the inner peripheral surfaces of the claw teeth cores 10a, 10b. Also, the rotor 4 comprises magnets having the same number of poles as that of poles of the stators 18, stuck to the rotating shaft 3 in a cylindrical manner. The stators 18 and the rotor 4 form a claw teeth motor.

Also, an inner gear 14 is formed on an inner peripheral surface of the rotating shaft 3 and torque generated on the rotor 4 is transmitted to the output shaft 1 formed with an outer gear 17, through planetary gears 16. In addition, four planetary gears 16 are provided equiangularly every 90 degrees and shafts of the planetary gears 16 are held on the rotating shaft 3. Also, the rotating shaft 3 is rotatably held on the end bracket 8 by means of a bearing 5 and fixed to the end bracket 9 by the use of a bearing 5'. Also, the output shaft 1 is rotatably held on the rotating shaft 3 by the means of a bearing 6 and sealed to the end bracket 8 by an oil seal 13, which is a sealing member. Thereby, the rotating shaft 3 is reduced in rotating speed and rotation is transmitted to the output shaft 1. Also, a transmission comprising the rotating shaft 3 formed with the inner gear 14, the planetary gears 16, and the output shaft 1 formed with the outer gear 17 is filled with lubricating oil.

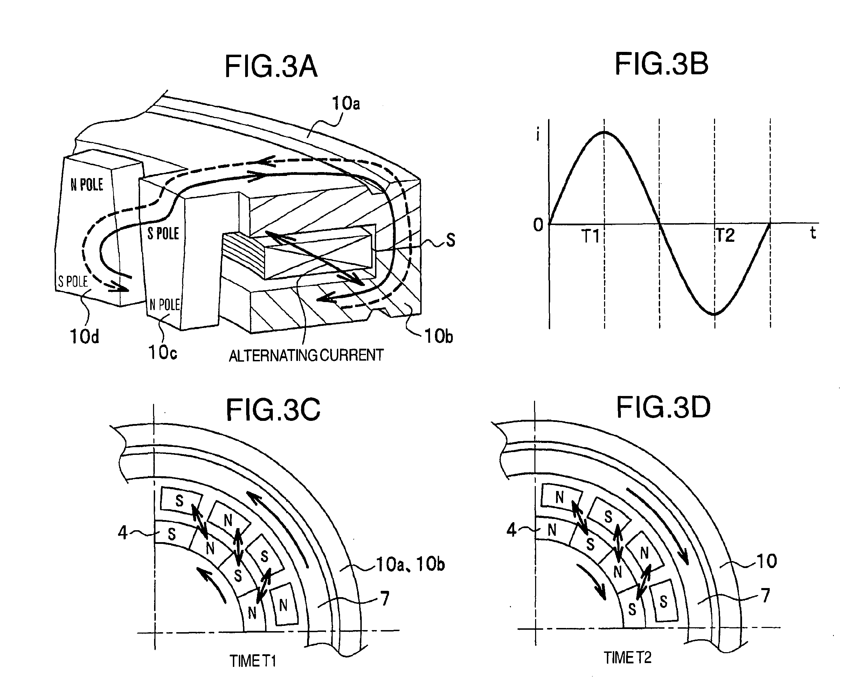

A principle of operation of the claw teeth motor will be described below with reference to Figs. 3A-3D.

As shown in Fig. 3A, the claws 10c provided on the claw teeth core 10a and claws 10d provided on the claw teeth core 10b are arranged alternately on inner peripheral sides to define gaps of air or lubricating oil.

When a sinusoidal alternating voltage is applied to the field coils 7 of the stators 18, a sinusoidal alternating current flows as shown in Fig. 3B. For the sinusoidal alternating current, maximum positive current flows at time T1 and maximum negative current flows at time T2. The current generates magnetic flux according to the right-handed screw rule in a closed circuit composed of the claw teeth core 10a, claw teeth core 10b and a magnetic gap, which is defined between the claws 10c, 10d. In addition, with magnetic flux, which flows clockwise to the claws 10c through core portions of the claw teeth cores 10a, 10b from the claws 10d as indicated by a thick, solid line, the claws 10d are magnetized to form N poles and the claws 10c are magnetized to form S poles (depicted in thick Gothic type in Fig. 3A). Conversely, with magnetic flux, which flows counterclockwise to the claws 10d through core portions of the claw teeth cores 10a, 10b from the claws 10c as indicated by a thick, broken line, the claws 10c are magnetized to form N poles and the claws 10d are magnetized to form S poles (depicted in thin Gothic type in Fig. 3A).

Fig. 3C is a view showing a manner of magnetization when an electric current flows counterclockwise through the field coil 7, S poles generated on the plurality of claws 10c, 10d provided on the claw teeth cores 10a, 10b and N poles on the rotor 4 draw one another, and N poles generated on the claws and S poles on the rotor 4 draw one another, whereby the rotor 4 rotates counterclockwise. On the other hand, Fig. 3D is a view showing a manner of poles when an electric current flows clockwise through the field coil 7, N poles generated on the plurality of claws provided on the claw teeth cores 10a, 10b and S poles on the rotor 4 draw one another, and S poles generated on the claws and N poles on the rotor 4 draw one another, whereby the rotor 4 rotates clockwise.

A rotating electrical machine with a transmission is directed to an improvement in rotating speed and torque output, which a normal motor (rotating electrical machine) can get. Where N (rad/sec) indicates a rotating speed of a claw teeth motor obtained by removing a transmission from the reduction motor 30 shown in, for example, Fig. 1 and T (N · m) indicates an output torque, a mechanical output of the claw teeth motor itself is N · T (W). Assuming that this provides a construction of the reduction motor 30 according to the embodiment, a rotating speed of a motor portion is made two times, and a speed reduction ratio is 2:1, torque is two times, that is, 2T at an output shaft end, so that output can be made two times, that is, 2N·T (W). At this time, an electric current input into the motor portion amounts to the same since torque generated on the motor portion is the same. Therefore, a shaft end output amounting to two times can be obtained with a current value and an external shape being the same. In order to attain this, it is necessary to increase a rotating speed of the motor itself.

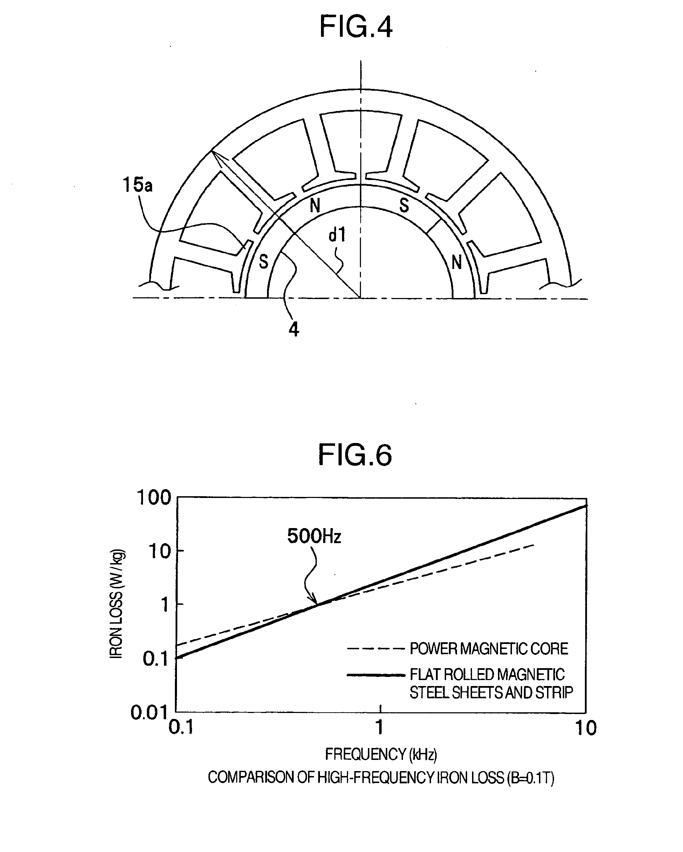

Subsequently, an explanation will be given to a slot type motor being a comparative example with reference to Fig. 4, which shows a cross sectional structure of a 12 slot-8 pole slot type motor. In addition, only an upper half of the structure is depicted in the drawing.

Six teeth 15a on the upper half, that is, twelve teeth in total are provided on a stator core having an outside diameter d1 and slots, round which a coil is wound, are formed between the teeth. That is, a plurality of field coils comprising a coil wound round the teeth are formed in an annular manner. Also, the rotor 4 magnetized in multi-poles is provided rotatably on inner peripheral sides of the teeth 15a. A fundamental frequency of an armature current (field current) when the motor is caused to rotate at 5000 r/min is 333 Hz. When the rotating speed is simply made two times, that is, 10000 r/min as in the example described above, the frequency becomes two times, that is, 666 Hz. Since an eddy current loss is proportional to the second power of frequency, an increase in frequency is not expedient because a slot type motor is considerably decreased in efficiency. However, a method of reducing the number of poles is provided to decrease the frequency.

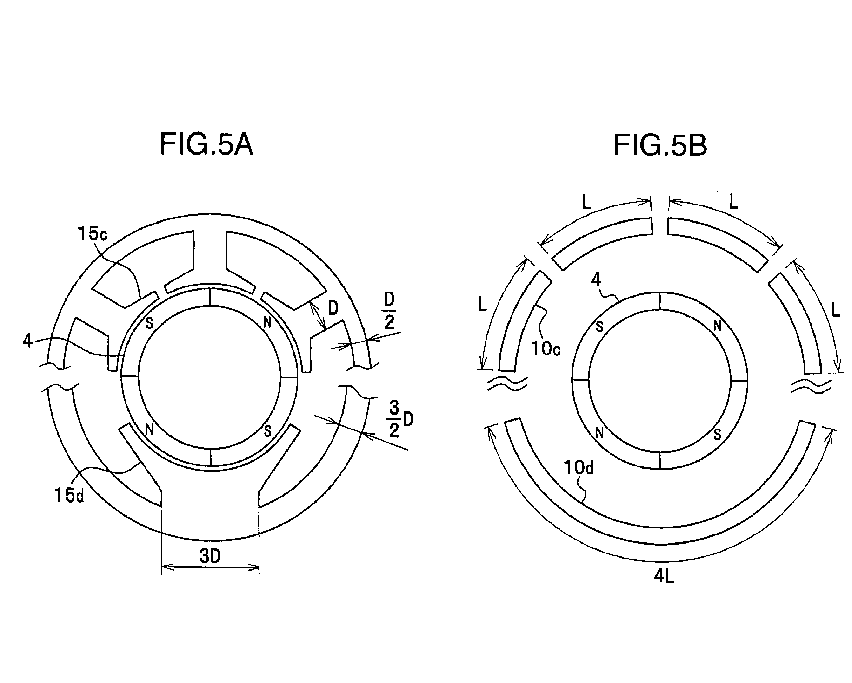

Subsequently, referring to Figs. 5A and 5B, a comparison is made between a slot type motor and a claw teeth motor in the case where the number of poles is different. Fig. 5A is a view showing a principle of a slot type motor, in which a plurality of T-shaped teeth 15c are provided equiangularly inside a stator outer periphery and slots are formed between the teeth.

A rotor 4 is rotatably provided on inner peripheral sides of the plurality of teeth 15c. Here, in particular, the case where the teeth is three in number as shown in an upper half of the drawing and the case where the tooth is one in number as shown in an lower half of the drawing are compared with each other with respect to a thickness of a core corresponding to a cross sectional area thereof when respective parts are made constant in magnetic flux density. Since magnetic flux passing through a coil wound portion is divided into two halves at a stator outer periphery, a thickness of a stator outer periphery amounts to D/2 where D indicates a width of respective coil wound portions of three teeth. On the other hand, 3D is required for a width of a coil wound portion of one tooth, so that 3D/2 is required for a thickness of a stator outer periphery. Accordingly, since one tooth needs a thickness of a stator outer periphery three times that for three teeth, a coil wound portion is shortened in a radial direction when a motor is the same in outside diameter, and coils are reduced in amount. Also, since teeth becomes three times in weight, it is preferred that the teeth be made thick at tip ends thereof and made gradually thin toward root portions thereof. In other words, it is required that core back portions be increased in radial width to be increased in cross sectional area according to a thickness of teeth thereof. In this case, a space for coil wound portions formed between teeth and a stator outer periphery is decreased and so coils are reduced in amount.

In other words, a motor is increased in outside diameter since coils of the same amount as that in case of three original teeth must be provided. That is, in order to wind coils of the same amount round slots, a stator is required to be increased in outside diameter. Since a decrease in the number of poles results in an increase in torque pulsation (torque ripple), it can be also said that such arrangement is not suited to a motor, according to the embodiment, which involves backlash in a transmission or the like.

Subsequently, Fig. 5B is a view showing a principle of a claw teeth motor, and a comparison is made between the case where four teeth depicted in an upper half of the drawing is provided, and the case where one tooth depicted in a lower half of the drawing is provided. Since a magnetomotive force NI is constant, magnetic flux density is dependent upon an area of a portion opposed to a rotor 4, and in the case where one claw tooth is provided, a length amounts only to 4L where L indicates a length of each of four teeth, so that no influences are produced on an amount and an outside diameter of a coil.

That is, a motor diameter is not varied for a 8 pole-8 claw type motor and a 4 pole-4 claw type motor. This is because a cross sectional area of a claw portion is increased in a circumferential direction corresponding to an increase in magnetic flux density every pole. Thereby, since a small-sized motor can be structured with a decrease in frequency, the motor is not made large in outside diameter.

Also, a transmission reduces torque generated by a motor in speed whereby it is possible to obtain a large torque at the output shaft. As compared with the case where a motor comprises a conventional slot type motor (JP-A-2003-143805), any coil end portion is not provided, so that a large torque can be materialized with a motor, which is short in an axial direction and flat. Also, since no field coils are exposed to a region filled with lubricating oil, there is no need for measures against damage to insulation of field coils caused by abrasion powder or the like, so that it is possible to make a whole system small in external shape. Also, contact areas between a core and field coils and between a bracket and a core are large, thus enabling an improvement in thermal conductivity.

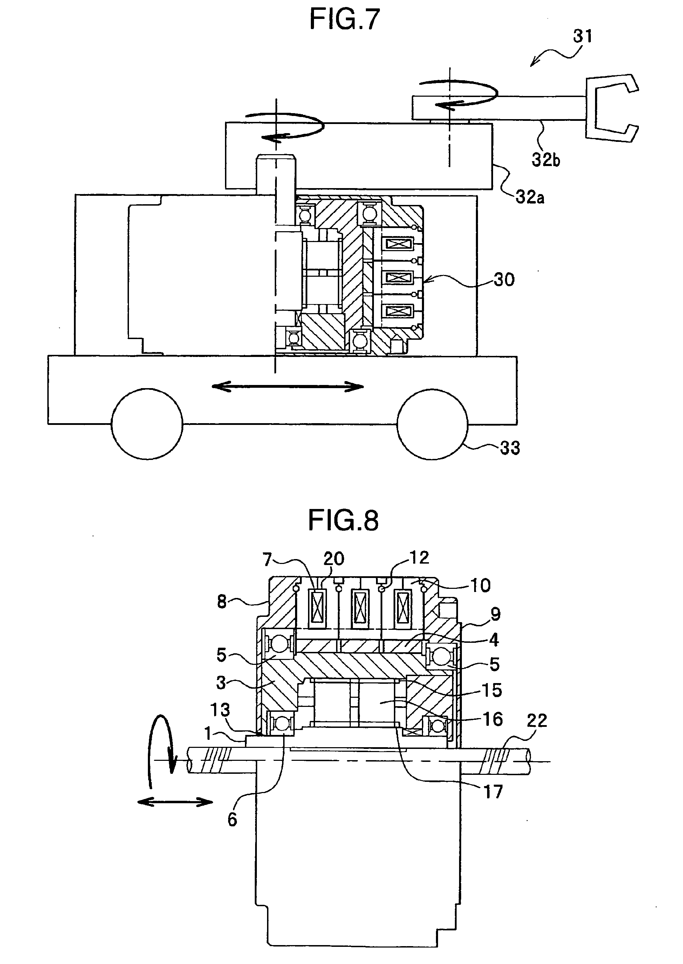

Also, in the case where a motor increased in frequency copes with the problem of torque pulsation described above, a claw teeth motor is advantageous because of being composed of a powder core. As shown in frequency-core loss characteristics in Fig. 6, a powder core (see a broken line) brings about core loss of 0.2 W/kg at a frequency of 0.1 kHz, which core loss increases linearly up to 5 W/kg at a frequency of 5 kHz on a logarithmic graph, and 50A700 flat rolled magnetic steel sheets and strip (see a solid line) brings about core loss of 0.1 W/kg at a frequency of 0.1 kHz, which core loss increases linearly up to 100 W/kg at a frequency of 10 kHz on the logarithmic graph, the both core losses intersecting each other at around 500 Hz. Therefore, a powder core possesses a property, in which core loss (W/kg) can be decreased relative to 50A700 flat rolled magnetic steel sheets and strip with an increase in frequency. Therefore, it is possible to provide a design for a structure without being so much decreased in efficiency also in case of being made high in speed, and it is possible to provide a structure with the number of poles, which is not so much related to the problem of torque ripple in case of being made as high as two times.

As described above, according to the embodiment, a transmission can be arranged on an inner peripheral portion of the rotor 4 within an outside diameter, which is required for a motor, so that it is possible to obtain a motor producing a large output torque with the same outside diameter. Also, since the structure is not one, in which lubricating oil is not in contact with the field coils 7, it is possible to materialize a product being long in life and good in reliability.

### (Second embodiment)

While the preceding embodiment has been described with respect to a motor being a rotating electrical machine, a driving apparatus using the motor can be constructed. Automotive equipment or a moving robot shown in Fig. 7 is conceivable as an example of the driving apparatus.

Use for articulate portions of an arm, which revolves and needs a large torque, of a moving body such as a moving robot (mobile robot) shown in Fig. 7 makes it possible to lighten the moving body to ensure a battery life for the moving body. A reduction motor 30 is mounted in a body of a moving robot 31, which can move in a longitudinal direction with the use of wheels 33, the reduction motor 30 revolving a swing arm 32a in a horizontal direction, and another motor received in the swing arm 32a revolves a swing arm 32b in the horizontal direction.

Also, since many motors are used in one automotive equipment, there is caused a problem that in a situation intended for an improvement in automotive fuel consumption, individual motors should be reduced in weight in order to decrease a whole automobile in weight, and so application to such location as a motor having a large power density is enabled. Fig. 8 shows an example of such application. While a hollow construction is easy to make use of as described above, a feed screw mechanism can also be arranged as an example, in which such construction is arranged in an inner region. The provision of a rotating shaft 3 having a hollow portion, or a feed screw 22 inside an output shaft makes it possible to obtain a driving apparatus capable of producing a large thrust.

### (Modification)

The invention is not limited to the embodiments described above but susceptible to various modifications in the following manner.
(1) While the first embodiment provides a reduction motor, it can be constructed as a generator. In this case, a transmission increases the input shaft 1 in rotating speed and the increased rotating speed is transmitted to the rotating shaft 3 and the rotor 4.
(2) While according to the first embodiment a sinusoidal alternating voltage is applied to the field coils 7, a rectangular alternating voltage can also be applied thereto. In the case where the output shaft 1 is under non-load, a no-load current linearly increasing or decreasing flows to the field coils 7. Also, when a mechanical load wT (w: rotating angular speed, T: torque) is applied to the output shaft 1, a stationary current corresponding to a load is superposed on a no-load current.
(3) While according to the first embodiment three stators 18 are provided side by side in an axial direction for application of a three-phase alternating current, one stator 18 can be used to apply a single-phase alternating current. In this case, torque ripple becomes larger than that in application of a three-phase alternating current.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A rotating electrical machine with a transmission, **characterized by** comprising:
a stator including a field coil arranged annularly;
a cylindrical-shaped rotor that rotates inside the stator;
a transmission provided in the cylindrical-shaped rotor; and
a housing containing at least the rotor, the transmission and lubricating oil,
wherein the stator comprises the annular field coil and an annular core containing the annular field coil and an organic material and provided on an inner peripheral surface thereof with a plurality of projecting claws.

2. A rotating electrical machine with a transmission, according to claim 1, **characterized in that** the annular core is formed to have a U-shaped cross section and the field coil and the organic material are contained in the U-shaped recess.

3. A rotating electrical machine with a transmission, according to claim 1, **characterized in that** the stator includes the inner peripheral surface, an outer peripheral surface and two side surfaces, and is substantially rectangular in cross section,
a terminal of the field coil is taken out from the outer peripheral surface, and
a sealing member is provided to seal a central shaft of the rotor, the side surfaces and the housing, respectively.

4. A rotating electrical machine with a transmission, according to claim 1, **characterized in that** the transmission is a planetary gear mechanism or a planetary roller mechanism provided on an inside diameter portion of the rotor.

5. A rotating electrical machine with a transmission, according to claim 1, **characterized in that** a plurality of the stators are provided in an axial direction and a multi-phase alternating current is applied to the field coil.

6. A rotating electrical machine with a transmission, according to claim 1, **characterized by** further comprising a feed screw mechanism provided on an inside diameter portion of the rotor to convert rotational movements into linear movements.

7. A rotating electrical machine with a transmission, according to claim 1, **characterized in that** the annular core is formed from a powder core.

8. A driving apparatus comprising the rotating electrical machine with a transmission, according to claim 1.
